# EUROPEAN PATENT APPLICATION

(11) **EP 3 715 187 A1**
(43) Date of publication of application: **30.09.2020**
(21) Application number: 20161378.3
(22) Date of filing: 06.03.2020
(51) Int. Cl.: B60R 22/26, B60R 22/02, B60R 22/18

(54) **MULTI-POINT SEAT BELT SYSTEM**

(30) Priority: 11.03.2019 TW 108108109
(71) Applicant: Wang, Liang-Hsiung, Tainan City (TW)
(72) Inventor: Wang, Liang-Hsiung, Tainan City (TW)
(74) Representative: Pallini Gervasi, Diego

(57) **Abstract**

A multi-point seat belt system (A) is applied to a seat of a vehicle and has a webbing locking device (1A), an emergency locking-retracting mechanism (9), and two automatic locking retractors (4A). The webbing locking device (1A) has a buckle assembly (10A) and a tongue assembly (20A) detachably disposed on the buckle assembly (10A). The emergency locking-retracting mechanism (9) is disposed on the seat and has two shoulder webbings (3A) connected to the buckle assembly (10A) and the tongue assembly (20A) respectively. The two automatic locking retractors (4A) are disposed on two sides of the seat and have two lower webbings (5A) connected to the buckle assembly (10A) and the tongue assembly (20A) respectively. The two shoulder webbings (3A) are locked by the two emergency locking retractors and the two lower webbings (5A) are tightened by the two automatic locking retractors (4A).

## Description

This application claims the benefit of Taiwan patent application No. 108108109, filed on March 11,2019.

### 1. Field of the Invention

The present invention relates to a multi-point seat belt system, and more particularly to a multi-point seat belt system that is applied to a seat of various vehicles.

### 2. Description of Related Art

Based on high safety requirements for various vehicles such as sport utility vehicles, racing cars or tanks, a multi-point seat belt system is disposed on a seat of the above-mentioned various vehicles. Every occupant in a vehicle can be simultaneously limited by distributed fixing points for fixing on a seat in the vehicle steadily. When an external force is applied to the vehicle, the occupant can be secured on the seat with a sufficient protection effect.

In a conventional multi-point seat belt system, the type of the conventional multi-point seat belt can be differentiated by the amount of the fixing points and may be a four-point type, a five-point type, a six-point type, or a seven-point type. Take a six-point type seat belt system for example. The six-point type seat belt system has one or two retractors, a buckling device, and four auxiliary webbings. The buckling device has a buckle assembly and a tongue assembly. The one or the two retractors are disposed on a top end of the seat or a rear side of a seat back of the seat in the vehicle. Two shoulder webbings can be locked by the two retractors and are respectively connected to the buckle assembly and the tongue assembly. The four auxiliary webbings are disposed beside two sides of the seat and are respectively connected to the buckle assembly and the tongue assembly. Six fixing points are formed by the two shoulder webbings and the four auxiliary webbings and are distributed around the seat.

When the buckling device of the six-point type seat belt system is correctly locked, an tilt locking mechanism disposed in each one of the retractors is locked, or when the retractors are locked due to emergency deceleration or brake, the shoulder webbings are uni-directionally locked by the retractors due to the change of the tension of the shoulder webbings. The auxiliary webbings distributed around the seat are connected to the buckling device for providing the supporting pulling force. The occupant restricted on the seat is safe.

Furthermore, the one or the two retractors of the conventional multi-point seat belt system are the emergency locking retractors (ELR). In use, the two shoulder webbings provided by the one or the two retractors disposed on the top end of the seat or the rear side of the seat back of the seat can be locked emergently. The two shoulder webbings are respectively connected to the buckle assembly and the tongue assembly of the buckling device. The auxiliary webbings are distributed around the seat and are respectively connected to the buckle assembly and the tongue assembly of the buckling device. The auxiliary webbings are simply connected to the seat and cannot be retracted and locked. When the vehicle is tilted, decelerated or braked in emergency, the shoulder webbings are locked by the one or the two retractors in the conventional multi-point seat belt system. Thus, the protection and the safety of the conventional multi-point seat belt system are insufficient.

For increasing the safety of the conventional multi-point seat belt system, multiple length adjusting buckles are respectively disposed on the auxiliary webbings to adjust lengths of the auxiliary webbings for suiting different occupants. The occupant can be certainly restricted on the seat by the conventional multi-point seat belt system with the length adjusting buckles for increasing the safety and the protection of the conventional multi-point seat belt system.

However, when the occupant sits on the seat and fastens the conventional multi-point seat belt system, the buckling device is downwardly pushed by the occupant and moves to a position adjacent to a center of a pelvis of the occupant, and then the occupant adjust the lengths of the auxiliary webbings adjacent to a waist respectively. The operation of the conventional multi-point seat belt system is inconvenient and time-consuming.

To overcome the shortcomings, the present invention provides a multi-point seat belt system to mitigate or obviate the aforementioned problems.

The objective of the invention is to provide a multi-point seat belt system that can solve the problems of the conventional multi-point seat belt system, such as that the protection is insufficient, and the operation is inconvenient and time-consuming.

The multi-point seat belt system has a webbing locking device, an emergency locking-retracting mechanism, and two automatic locking retractors.

The webbing locking device has a buckle assembly and a tongue assembly. The buckle assembly has a buckle base and a locking assembly. The buckle base is rigid and has a first connecting portion and a first insertion portion. The first insertion portion of the buckle assembly is formed below the first connecting portion and has a first through hole formed through the first insertion portion. The locking assembly is disposed on the buckle base. The tongue assembly has a tongue base. The tongue base is rigid and has a tongue portion, a second connecting portion, and a second insertion portion. The tongue portion is selectively inserted into the locking assembly of the buckle assembly for locking or unlocking. The second connecting portion and the second insertion portion are formed on an end of the tongue portion. The second connecting portion is located above the second insertion portion. The second insertion portion has a second through hole formed through the second insertion portion.

The emergency locking-retracting mechanism has at least one emergency locking retractor and two shoulder webbings. The two shoulder webbings are connected to the at least one emergency locking retractor for being extracted, retracted, and locked automatically. One of the two shoulder webbings is connected to the first connecting portion of the buckle assembly. The other one of the two shoulder webbings is connected to the second connecting portion of the tongue assembly. The emergency locking-retracting mechanism is adapted to be disposed on a seat or a vehicle body.

Each one of the two automatic locking retractors has a lower webbing being extracted, retracted, and locked automatically. The two automatic locking retractors are adapted to be disposed on two sides of the seat. The lower webbing of one of the two automatic locking retractors is inserted through the first through hole of the first insertion portion and is disposed on a side of a cushion of the seat. The lower webbing of the other one of the two automatic locking retractors is inserted through the second through hole of the second insertion portion and is disposed on another side of the cushion of the seat.

In addition, the multi-point seat belt system has a webbing locking device, an emergency locking-retracting mechanism, and two automatic locking retractors.

The webbing locking device has a buckle assembly, a tongue assembly, and two sliding members. The buckle assembly has a buckle base and a locking assembly. The buckle base is rigid and has a first connecting portion and a first insertion portion. The first insertion portion is formed below the first connecting portion and has a first through hole formed through the first insertion portion of the buckle base. The locking assembly is disposed on the buckle base.

The tongue assembly has a tongue base. The tongue base is rigid and has a tongue portion, a second connecting portion, and a second insertion portion. The tongue portion is selectively inserted into the locking assembly of the buckle assembly for locking or unlocking. The second connecting portion and the second insertion portion are formed on an end of the tongue portion. The second insertion portion is located above the second connecting portion. The second insertion portion has a second through hole formed through the second insertion portion of the tongue base.

One of the two sliding members is inserted through the first through hole of the first insertion portion of the buckle assembly and is able to move relative to the first insertion portion of the buckle base. The other one of the two sliding members is inserted through the second through hole of the second insertion portion of the tongue assembly and is able to move relative to the second insertion portion of the tongue base. Each one of the two sliding members has a through groove being inclined.

The emergency locking-retracting mechanism has at least one emergency locking retractor and two shoulder webbings. The two shoulder webbings are connected to the at least one emergency locking retractor for being extracted, retracted, and locked automatically. One of the two shoulder webbings is inserted through the first through hole of the first insertion portion of the buckle assembly and the through groove of one of the two sliding members. The other one of the two shoulder webbings is inserted through the second through hole of the second insertion portion of the tongue assembly and the through groove of the other one of the two sliding members. The emergency locking-retracting mechanism is adapted to be disposed on a seat or a vehicle body. The two shoulder webbings are respectively disposed on two sides of a cushion of the seat.

Each one of the two automatic locking retractors has a lower webbing being extracted, retracted, and locked automatically. The lower webbing of one of the two automatic locking retractors is connected to the first connecting portion of the buckle assembly. The lower webbing of the other one of the two automatic locking retractors is connected to the second connecting portion of the tongue assembly. The two automatic locking retractors are adapted to be disposed on two sides of the seat.

The multi-point seat belt system is applied to the seat of the vehicle, provides multiple distributed fixing points to fix an occupant on the seat for protecting the occupant, and has the following advantages:
1. Promote the safety protection performance of the multi-point seat belt system: the emergency locking-retracting mechanism of the multi-point seat belt system is disposed on the seat or the vehicle body by the at least one emergency locking retractor and provides the two shoulder webbings able to be locked emergently. The two automatic locking retractors are disposed on the two sides of the seat and provide two lower webbings able to be locked. The webbing locking device is connected between the two shoulder webbings of the emergency locking-retracting mechanism and the two lower webbings of the two automatic locking retractors. The two shoulder webbings are respectively inserted through the webbing locking device and are respectively extended to and fixed on the two sides of the seat. The two lower webbings are respectively inserted through the webbing locking device and are respectively extended to and fixed on the two sides of the seat. The buckle assembly and the tongue assembly are buckled correctly. When the vehicle is tilted, decelerated or braked in emergency, the two shoulder webbings are locked by the at least one emergency locking retractor immediately. The two lower webbings can be retracted and locked by the two automatic locking retractors. The shoulder webbings and the lower webbings are distributed around a body of the occupant and can fasten the occupant on the seat steadily for promoting the safety protection performance of the multi-point seat belt system.
2. Convenient operation: as above-described, the two shoulder webbings in the emergency locking-retracting mechanism can be pulled freely. When the vehicle is tilted, decelerated or braked in emergency, the two shoulder webbings can generate a locking function. The lower webbing of each one of the two automatic locking retractors can be pulled, is retracted automatically to a suitable length for fitting the occupant, and then is locked. When the occupant sitting on the seat fastens the multi-point seat belt system, the webbing locking device can be moved to a position adjacent to a center of a pelvis of the occupant by the occupant. When the webbing locking device is moving, the two shoulder webbings and the two lower webbings can be pulled and extended to the suitable lengths automatically. The length adjustments of the two shoulder webbings and the two lower webbings are not manually but automatically done. The occupant can fasten the multi-point seat belt system quickly and conveniently.

In the multi-point seat belt system, the at least one emergency locking retractor is disposed on the seat or the vehicle body. The two shoulder webbings are able to be locked emergently, are respectively inserted through the buckle assembly and the tongue assembly of the webbing locking device, and are respectively extended and connected to the two sides of the seat. The first insertion portion in the buckle assembly and the second insertion portion in the tongue assembly both have the moveable sliding members respectively. One of the two shoulder webbings is inserted through the first through hole of the first insertion portion of the buckle assembly and the through groove of the sliding member disposed in the first through hole of the first insertion portion. The other one of the two shoulder webbings is inserted through the second through hole of the second insertion portion of the tongue assembly and the through groove of the sliding member disposed in the second through hole of the second insertion portion. The two shoulder webbings passing through the buckle assembly and the tongue assembly can be locked or unlocked by the two sliding members respectively. After locking, the lengths of the lower sections of the two shoulder webbings cannot be extended even though the buckle assembly slides relative to the tongue assembly. The safety protection performance of the multi-point seat belt system is good. After unlocking, the tongue assembly is buckled to the buckle assembly, and the shoulder webbings can slide relative to the buckle assembly and the tongue assembly temporarily for increasing the operation of the multi-point seat belt system.

The multi-point seat belt system has a shoulder webbing connecting device. The shoulder webbing connecting device is selectively disposed between the two shoulder webbings for limiting a distance between the two shoulder webbings. When the vehicle is tilted, decelerated or braked in emergency, the two shoulder webbings cannot fall off from two shoulders of the occupant for ensuring the safety protection performance of the multi-point seat belt system.

Other objectives, advantages and novel features of the invention will become more apparent from the following detailed description when taken in conjunction with the accompanying drawings.

### IN THE DRAWINGS:

Fig. 1 is a front side view of a first embodiment of a multi-point seat belt system in accordance with the present invention;
Fig. 2 is a front side view of a second embodiment of a multi-point seat belt system in accordance with the present invention;
Fig. 3 is an exploded perspective view of a webbing locking device of the multi-point seat belt system in Figs. 1 and 2;
Fig. 4 is another exploded perspective view of the webbing locking device of the multi-point seat belt system in Figs. 1 and 2;
Fig. 5 is an enlarged front side view of an automatic locking retractor of the multi-point seat belt system in Figs. 1 and 2;
Fig. 6 is an enlarged side view of the automatic locking retractor of the multi-point seat belt system in Figs. 1 and 2;
Fig. 7 is another enlarged front side view of the automatic locking retractor of the multi-point seat belt system in Figs. 1 and 2;
Fig. 8 is another enlarged side view of the automatic locking retractor of the multi-point seat belt system in Figs. 1 and 2;
Fig. 9 is an enlarged front side view of the multi-point seat belt system in Figs. 1 and 2, showing a buckle assembly of the webbing locking device has an buckle outer shell, and a tongue assembly of the webbing locking device has a tongue outer shell;
Fig. 10 a front side view of the multi-point seat belt system in Fig. 1, showing the multi-point seat belt system has a shoulder webbing connecting device;
Fig. 11 is a front side view of the multi-point seat belt system in Fig. 2, showing the multi-point seat belt system has a shoulder webbing connecting device;
Fig. 12 is an operational front side view of the multi-point seat belt system in Figs. 2 and 9, showing the multi-point seat belt system is disposed on a seat with an occupant;
Fig. 13 is a front side view of a third embodiment of a multi-point seat belt system in accordance with the present invention;
Fig. 14 is a front side view of a fourth embodiment of a multi-point seat belt system in accordance with the present invention;
Fig. 15 is an exploded perspective view of a webbing locking device of the multi-point seat belt system in Figs. 13 and 14;
Fig. 16 is another exploded perspective view of the webbing locking device of the multi-point seat belt system in Figs. 13 and 14;
Fig. 17 is an exploded perspective view of a buckle assembly and one of two sliding members of the webbing locking device in Figs. 13 to 15;
Fig. 18 is another exploded perspective view of the buckle assembly and one of the two sliding members of the webbing locking device in Figs. 13 to 15;
Fig. 19 is an exploded perspective view of a tongue assembly and the other one of the two sliding members of the webbing locking device in Figs. 13 to 15;
Fig. 20 is another exploded perspective view of the tongue assembly and the other one of the two sliding members of the webbing locking device in Figs. 13 to 15;
Fig. 21 is a perspective view of each one of the sliding members in Figs. 16 to 20;
Fig. 22 is an enlarged side view in partial section of the webbing locking device in Figs. 16 to 20, showing one of the two sliding members is disposed in the buckle assembly or the tongue assembly;
Fig. 23 is an operational side view of the webbing locking device in Figs. 16 to 20, showing one of the two sliding members moves relative to the buckle assembly or the tongue assembly for clipping one of the shoulder webbings;
Fig. 24 is an enlarged front side view of the multi-point seat belt system in Figs. 13 and 14, showing the buckle assembly of the webbing locking device has an buckle outer shell, and the tongue assembly of the webbing locking device has a tongue outer shell;
Fig. 25 is a front side view of the multi-point seat belt system in Fig. 14, showing the multi-point seat belt system has a shoulder webbing connecting device; and
Fig. 26 is an operational front side view of the multi-point seat belt system in Fig. 14, showing the multi-point seat belt system is disposed on a seat.

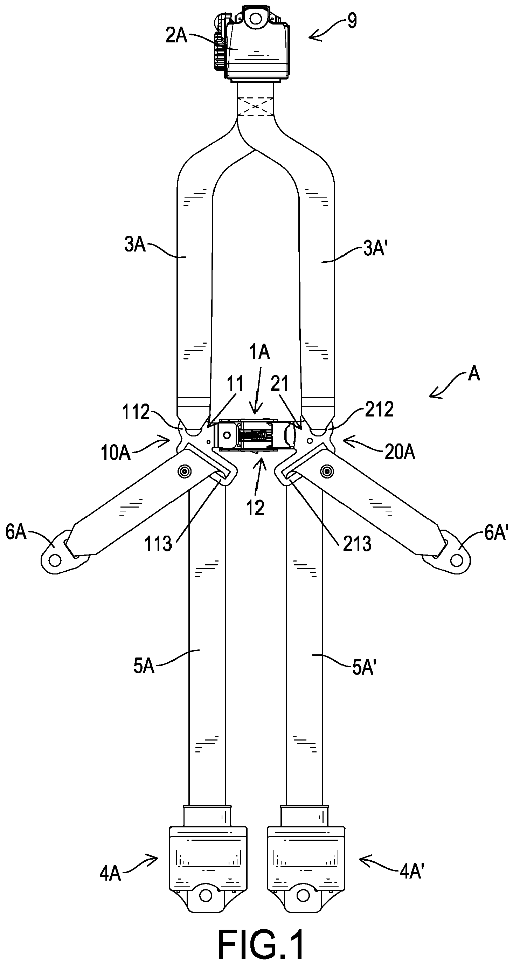

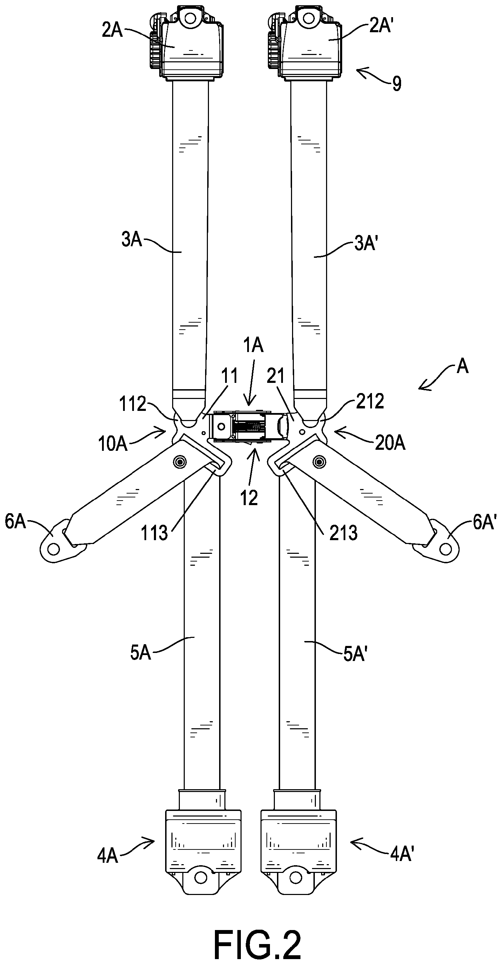

With reference to Figs. 1 and 2, a first embodiment and a second embodiment of a multi-point seat belt system A in accordance with the present invention both comprise a webbing locking device 1A, an emergency locking-retracting mechanism 9, and two automatic locking retractors (ALR) 4A, 4A'. The difference between the first embodiment and the second embodiment of multi-point seat belt system A is in the structures of the emergency locking-retracting mechanisms 9. The rest of structures of multi-point seat belt system A is the same.

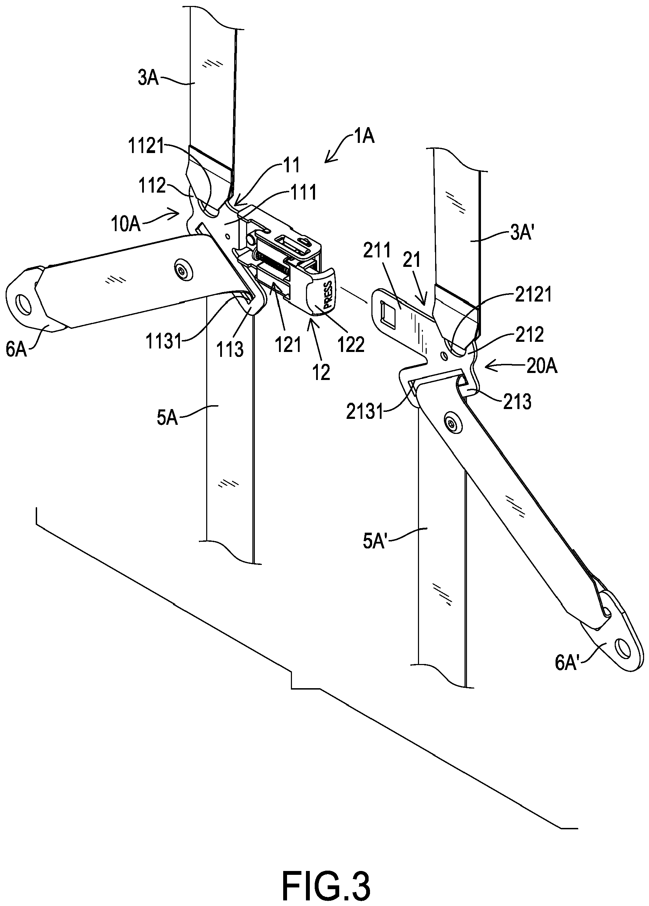

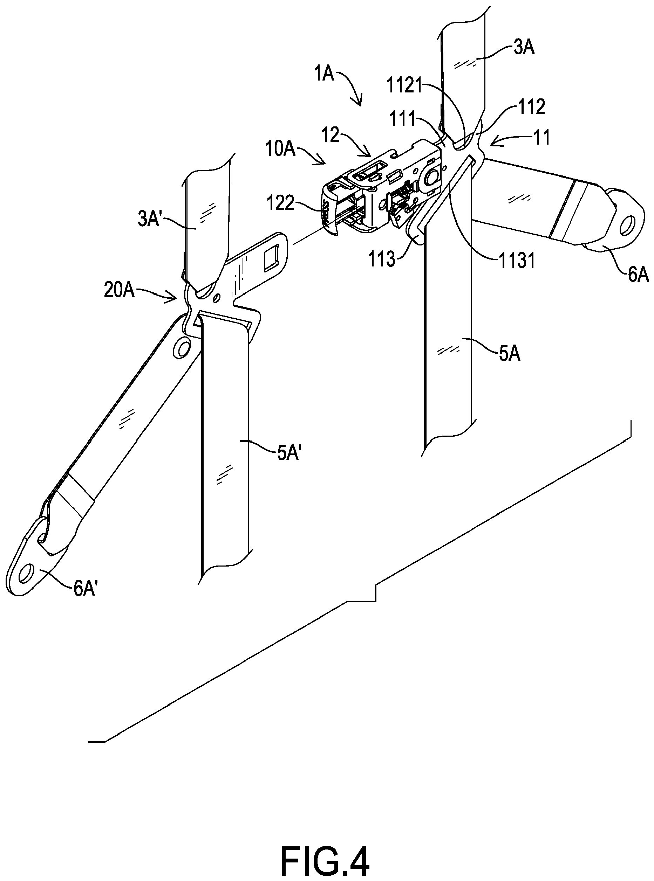

With reference to Figs. 1 to 4, the webbing locking device 1A is connected to the emergency locking-retracting mechanism 9 and the two automatic locking retractors 4A, 4A', and has a buckle assembly 10A and a tongue assembly 20A. The tongue assembly 20A is selectively locked or unlocked to the buckle assembly 10A.

With reference to Figs. 1 to 4, the buckle assembly 10A has a buckle base 11 and a locking assembly 12. The buckle base 11 is a rigid base and is made of a rigid material or a metallic material, such as steel. The buckle base 11 has a body 111, a first connecting portion 112, and a first insertion portion 113. The first connecting portion 112 and the first insertion portion 113 are formed on an end of the body 111. The first connecting portion 112 is formed above the first insertion portion 113 and has a first connecting hole 1121 formed through the first connecting portion 112. The first insertion portion 113 has a first through hole 1131. The first through hole 1131 is formed through the first insertion portion 113 and is an elongated hole.

The locking assembly 12 is disposed on the body 111 of the buckle base 11. The locking assembly 12 has a locking mechanism 121 and a pressing member 122. The locking mechanism 121 is disposed on the body 111 of the buckle base 11. The pressing member 122 can selectively drive the locking mechanism 121 to change a locked state to an unlocked state. The locking assembly 12 can be selected from a known product and will not be described herein.

With reference to Figs. 1 to 4, the tongue assembly 20A has a tongue base 21. The tongue base 21 is a rigid base and is made of a rigid material or a metallic material, such as steel. The tongue base 21 has a tongue portion 211, a second connecting portion 212, and a second insertion portion 213. The second connecting portion 212 and the second insertion portion 213 are formed on an end of the tongue portion 211. The second connecting portion 212 is located above the second insertion portion 213. The second connecting portion 212 has a second connecting hole 2121 formed through the second connecting portion 212. The second insertion portion 213 has a second through hole 2131. The second through hole 2131 is formed through the second insertion portion 213 and is an elongated hole. The tongue portion 211 of the tongue assembly 20A can be selectively inserted into and is locked in the locking assembly 12 of the buckle assembly 10A. When the pressing member 122 of the locking assembly 12 is pressed, the locking assembly 12 can release the tongue assembly 20A.

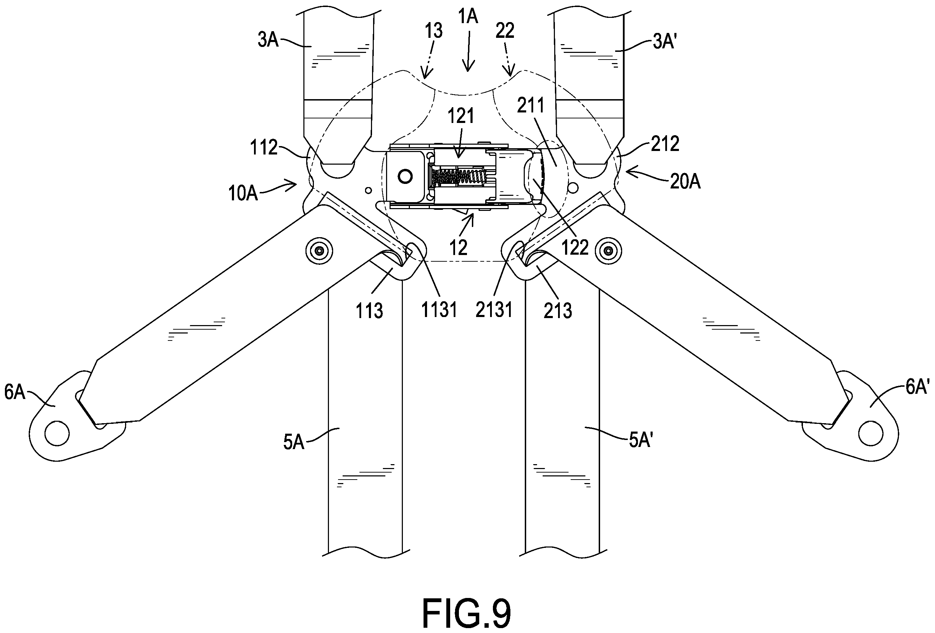

With reference to Fig. 9, in the webbing locking device 1A, the buckle assembly 10A has a buckle outer shell 13. The buckle outer shell 13 of the buckle assembly 10A covers the buckle base 11 and the locking assembly 12. The first connecting portion 112 of the buckle base 11, the first insertion portion 113, and the pressing member 122 of the locking assembly 12 are exposed out of the buckle outer shell 13. The tongue assembly 20A has a tongue outer shell 22. The tongue outer shell 22 of the tongue assembly 20A covers the tongue base 21. The tongue portion 211 of the tongue base 21, the second connecting portion 212, and the second insertion portion 213 are exposed out of the tongue outer shell 22.

With reference to Figs. 1, 2, and 12, the emergency locking-retracting mechanism 9 is adapted to be disposed on a seat of a vehicle, a seat back of the seat, or a back side of the seat. The emergency locking-retracting mechanism 9 has at least one emergency locking retractor (ELR) 2A, 2A' and two shoulder webbings 3A, 3A'. The two shoulder webbings 3A, 3A' are connected to the at least one emergency locking retractor 2A, 2A' for being extracted, retracted, and locked automatically. One of the two shoulder webbings 3A is connected to the first connecting portion 112 of the buckle assembly 10A. The other one of the two shoulder webbings 3A' is connected to the second connecting portion 212 of the tongue assembly 20A.

With reference to Fig. 1, the amount of the at least one emergency locking retractor 2A is one. The two shoulder webbings 3A, 3A' are connected to each other to form a Y-shaped webbing for connecting the emergency locking retractor 2A. With reference to Fig. 2, the amount of the at least one emergency locking retractor 2A, 2A' is two. The two shoulder webbings 3A, 3A' are respectively connected to the two emergency locking retractors 2A, 2A'.

With reference to Figs. 1, 2, and 12, the two automatic locking retractors 4A, 4A' are adapted to be disposed on two sides or the outside of the seat in the vehicle. Each one of the two automatic locking retractors 4A, 4A' has a lower webbing 5A, 5A' being extracted, retracted, and locked automatically. The webbing locking device 1A is connected between the two shoulder webbings 3A, 3A' of the emergency locking-retracting mechanism 9 and the two lower webbings 5A, 5A' of the two automatic locking retractors 4A, 4A' for providing multiple distributed fixing points around the seat.

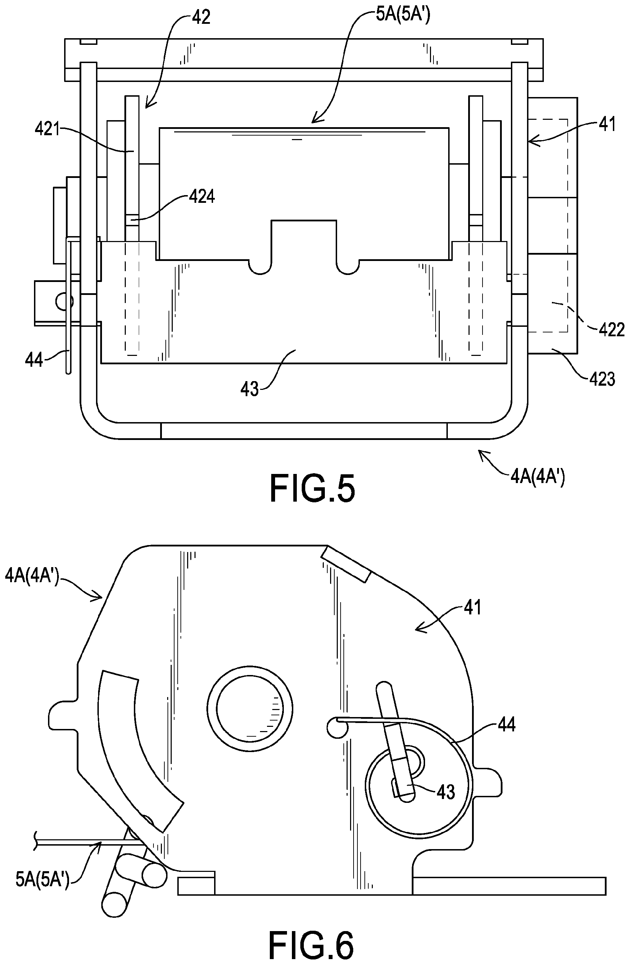

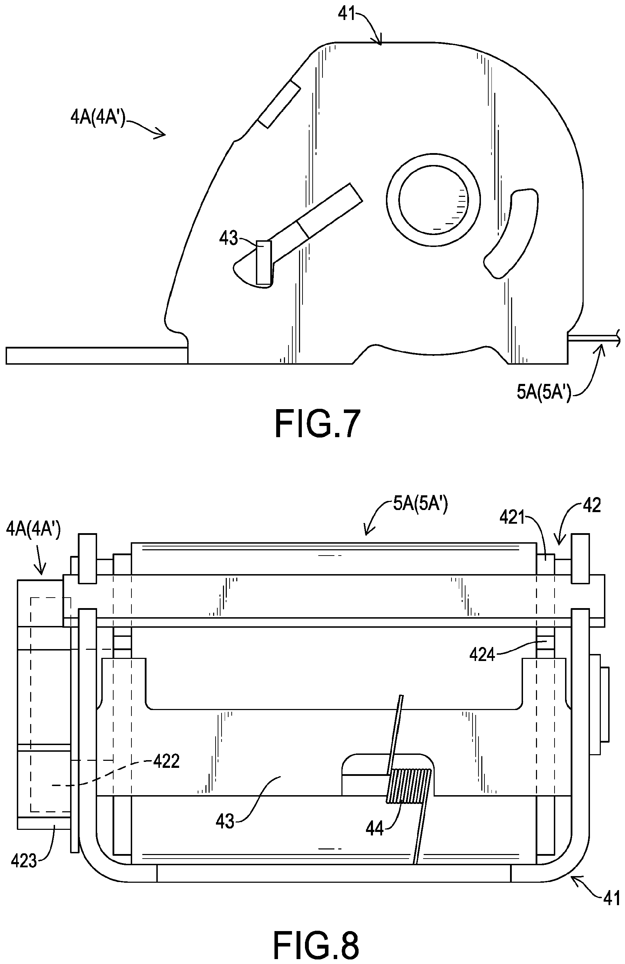

The at least one emergency locking retractor 2A, 2A' can be selected from a known emergency locking retractor. Each one of the two automatic locking retractors 4A, 4A' can be selected from a known automatic locking retractor. With reference to Figs. 5 to 8, each one of the two automatic locking retractors 4A, 4A' has a base 41, a retracting member 42, a stopper 43, a torsion spring 44, and a lower webbing 5A, 5A. The retracting member 42 can be a one-way ratchet mechanism, is rotatably disposed on the base 41, and is connected to an end of the lower webbing 5A, 5A'. The retracting member 42 has a ratchet 421, a return spring 422, and a cover 423. The ratchet 421 is mounted on the base 41 and has at least one notch 424. The at least one notch 424 is formed on the ratchet 421 at a spaced interval. The return spring 422 is disposed on the base 41 and is connected to the ratchet 421 for retracting. The cover 423 is disposed on the base 41 and covers the return spring 422. The retracting member 42 can retract the lower webbing 5A, 5A' automatically. The stopper 43 is connected to the torsion spring 44, is disposed on the base 41 in an oscillating manner, and is located beside the retracting member 42. The torsion spring 44 provides an elastic force to the stopper 43 for timely stopping the retracting member 42 to rotate by an elastic force provided by the torsion spring 44. The stopper 43 driven by the torsion spring 44 can be inserted into the at least one notch 424 of the ratchet 421 for positioning the ratchet 421. With reference to Figs. 5 and 6, the torsion spring 44 is connected between an end of the stopper 43 and the base 41. With reference to Figs. 7 and 8, the torsion spring 44 is connected between a middle section of the stopper 43 and the base 41.

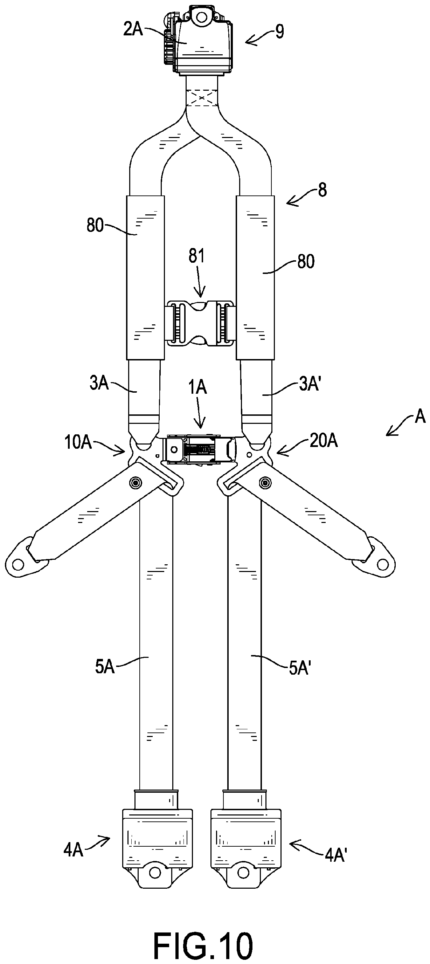

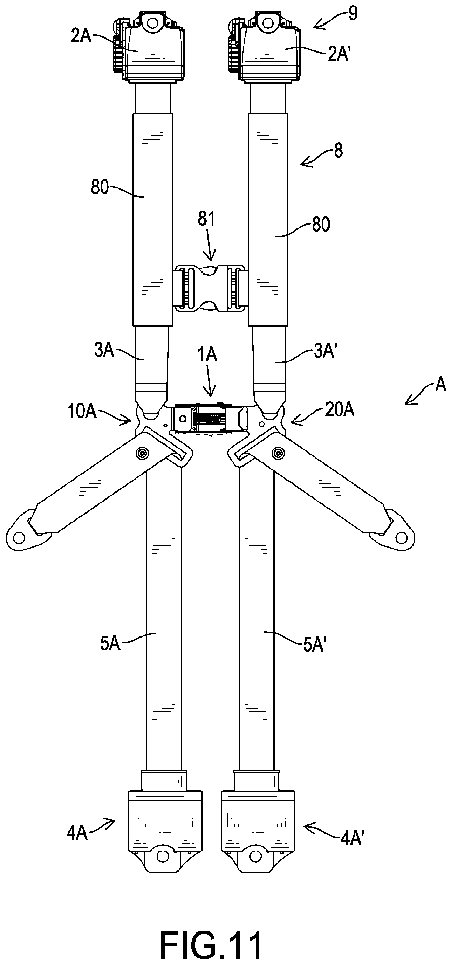

With reference to Figs. 10 and 11, in the first embodiment and the second embodiment of the multi-point seat belt system A, the multi-point seat belt system A further has a shoulder webbing connecting device 8. The shoulder webbing connecting device 8 is selectively disposed between the two shoulder webbings 3A, 3A' for limiting a distance between the two shoulder webbings 3A, 3A'. The shoulder webbing connecting device 8 has two webbing sheaths 80 and a buckling assembly 81. The two webbing sheaths 80 are respectively and detachably disposed around the two shoulder webbings 3A, 3A'. The buckling assembly 81 is detachably connected between the two webbing sheaths 80. The webbing sheaths 80 and the buckling assembly 81 can be selected from the known products and will not be described herein.

With reference to Figs. 1, 2, 9, and 12, in the first embodiment and the second embodiment of the multi-point seat belt system A, the at least one emergency locking retractor 2A, 2A' of the emergency locking-retracting mechanism 9 is adapted to be disposed on a top end of the seat back of the seat in the vehicle, or a back side of the top end of the seat back, the seat back, or a part of the vehicle body located behind the seat back. A disposed position of the at least one emergency locking retractor is adjustable according to the designs of the vehicles.

The two shoulder webbings 3A, 3A' connected to the at least one emergency locking retractor 2A, 2A' are passed through a top of the seat back and are extended downwardly. One of the two emergency locking retractors 2A is connected to the first connecting hole 1121 of the first connecting portion 112 of the buckle assembly 10A by a distal end of a corresponding one of the two shoulder webbings 3A. The other one of the two emergency locking retractors 2A' is connected to the second connecting hole 2121 of the second connecting portion 212 of the tongue assembly 20A by a distal end of a corresponding one of the two shoulder webbings 3A'. The two emergency locking retractors 2A, 2A' having the two shoulder webbings 3A, 3A' are able to pull freely. When the vehicle is decelerated or braked in emergency, the shoulder webbings 3A, 3A' can be locked by the two emergency locking retractors 2A, 2A'.

In the first embodiment and the second embodiment of the multi-point seat belt system A, the two lower webbings 5A, 5A' of the two automatic locking retractors 4A, 4A' are respectively and downwardly extended from two sides of a cushion of the seat. The lower webbing 5A of one of the two automatic locking retractors 4A is inserted through the first through hole 1131 of the first insertion portion 113 of the buckle assembly 10A. A distal end of the lower webbing 5A is connected to a lower fixing member 6A and is disposed beside the cushion of the seat. The lower webbing 5A' of the other one of the two automatic locking retractors 4A' is inserted through the second through hole 2131 of the second insertion portion 213 of the tongue assembly 20A. A distal end of the lower webbing 5A' is connected to another lower fixing member 6A' and is disposed beside the cushion of the seat. The lower webbing 5A, 5A' of each one of the two automatic locking retractors 4A, 4A' can be pulled, is retracted automatically to a suitable length for fitting the occupant, and then is locked.

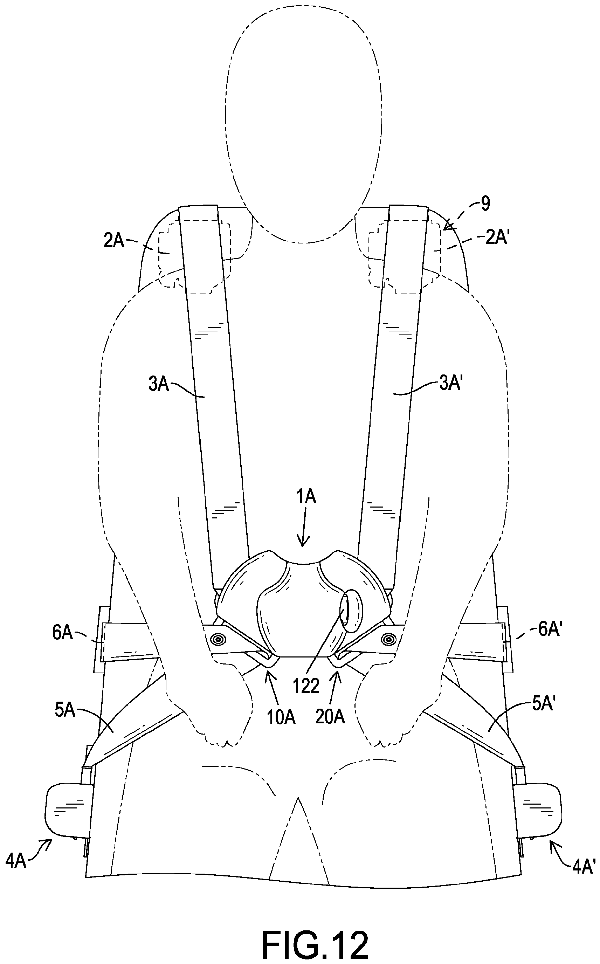

As the second embodiment of the multi-point seat belt system A is in use, with reference to Figs. 9 and 12, when the occupant sitting on the seat fastens the multi-point seat belt system A, the webbing locking device 1A can be moved to a position adjacent to a center of a pelvis of the occupant by the occupant. When the webbing locking device 1A is moving, the two shoulder webbings 3A, 3A' and the two lower webbings 5A, 5A' can be pulled and move to the suitable lengths automatically. The length adjustments of the two shoulder webbings 3A, 3A' and the two lower webbings 5A, 5A' are not done manually. The occupant can fasten the multi-point seat belt system A quickly and conveniently.

When the vehicle is tilted, decelerated or braked in emergency, the two shoulder webbings 3A, 3A' are locked by the two emergency locking retractors 2A, 2A' immediately, and the two lower webbings 5A, 5A' are locked by the two automatic locking retractors 4A, 4A'. The shoulder webbings 3A, 3A' and the lower webbings 5A, 5A' are distributed around a body of the occupant and can fasten the occupant on the seat steadily for promoting the safety protection performance of the multi-point seat belt system A.

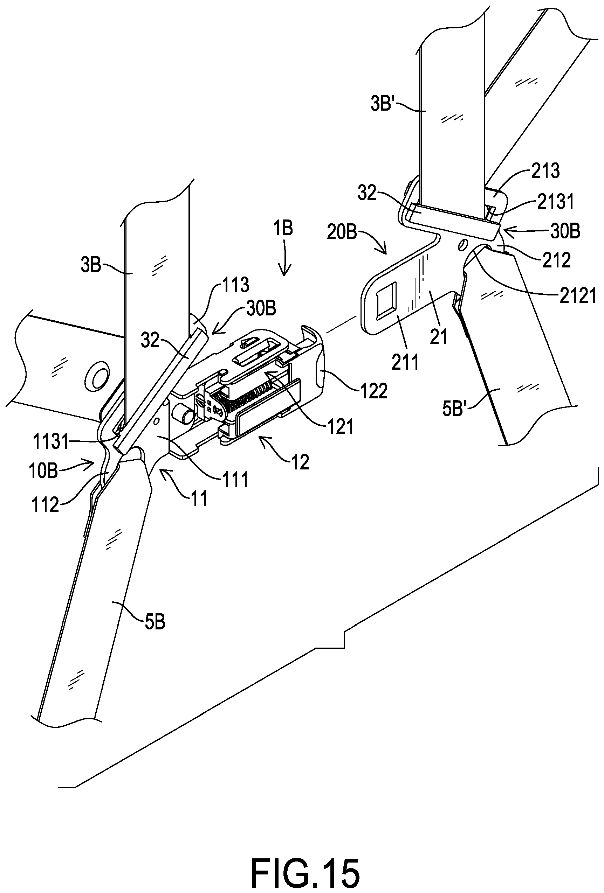

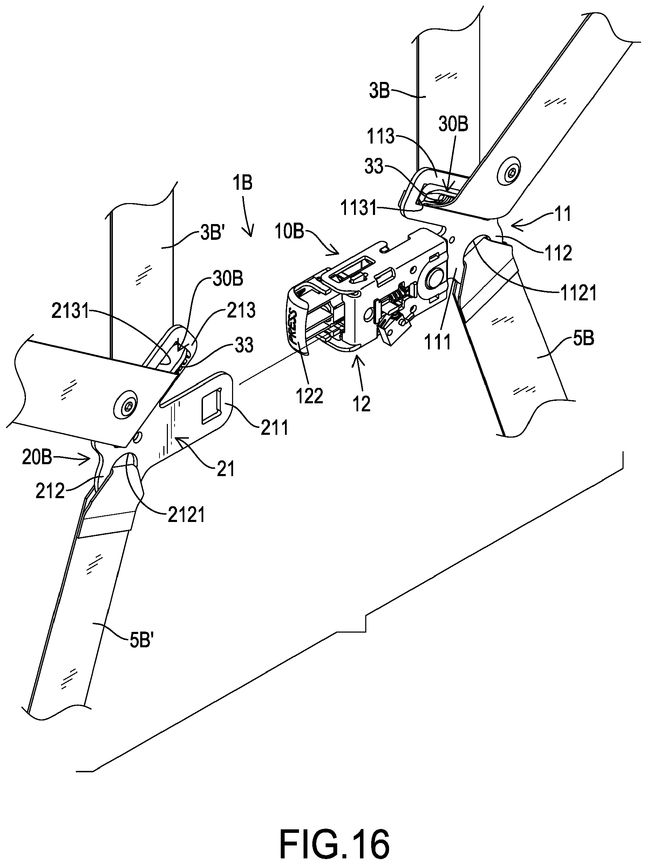

With reference to Figs. 1 to 2, and 13 to 16, the structures of a third embodiment and a fourth embodiment of the multi-point seat belt system B and the structures of the first embodiment and the second embodiment of the multi-point seat belt system A are almost the same and all have the webbing locking device 1A, 1A', 1B, 1B', the emergency locking-retracting mechanism 9, and the two automatic locking retractors 4A, 4A', 4B, 4B'. The functions of the emergency locking-retracting mechanisms 9 and the automatic locking retractors 4B, 4B' in the third embodiment and the fourth embodiment of the multi-point seat belt system B are respectively same to the functions of the emergency locking-retracting mechanisms 9 and the automatic locking retractors 4A, 4A' in the first embodiment and the second embodiment of the multi-point seat belt system A.

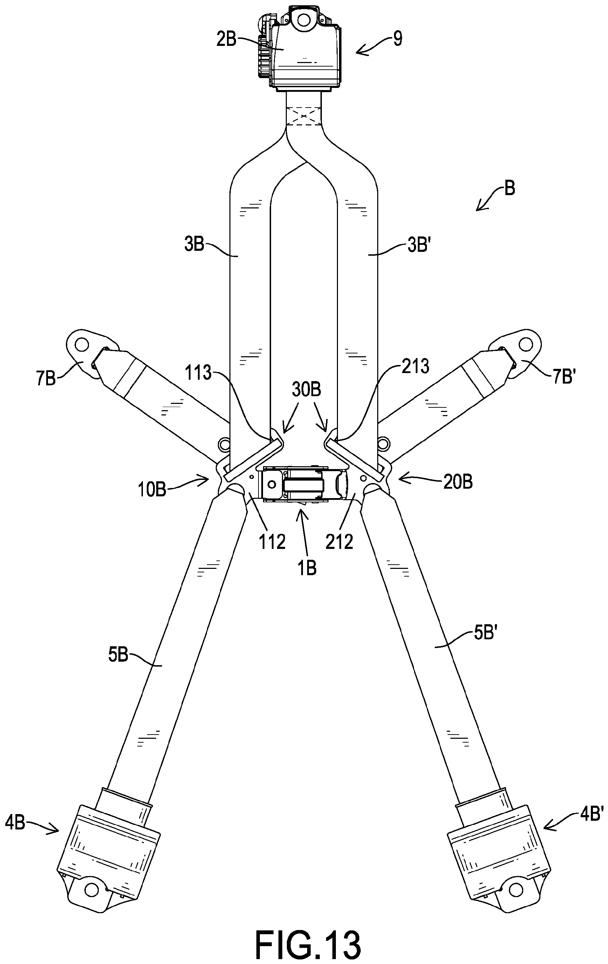

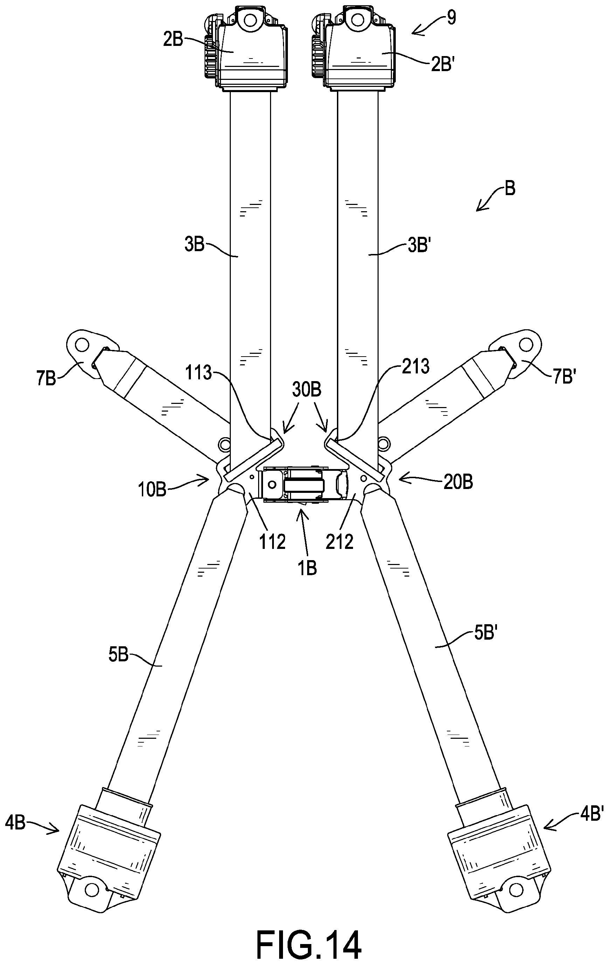

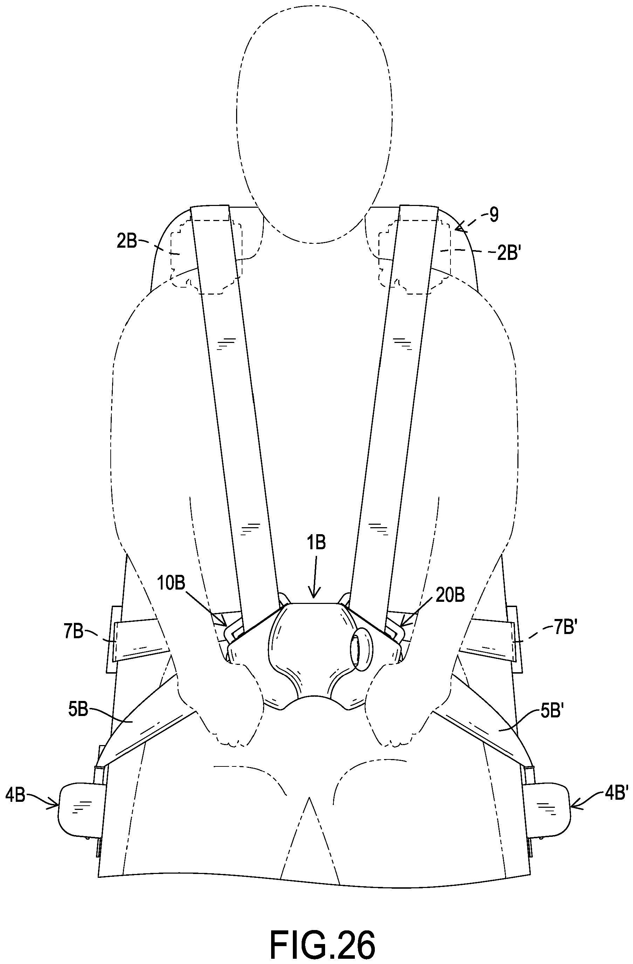

With reference to Figs. 13, 14, 24, and 26, in the third embodiment and the fourth embodiment of the multi-point seat belt system B, the emergency locking-retracting mechanism 9 is adapted to be disposed on the seat of the vehicle or the vehicle body. The emergency locking-retracting mechanism 9 has the at least one emergency locking retractor (ELR) 2B, 2B' and the two shoulder webbings 3B, 3B'. The two shoulder webbings 3B, 3B' are connected to the at least one emergency locking retractor 2B, 2B' for being extracted, retracted, and locked automatically. With reference to Fig. 13, the amount of the at least one emergency locking retractor 2B is one. The two shoulder webbings 3B, 3B' are connected to each other to form a Y-shaped webbing for connecting the emergency locking retractor 2B. With reference to Fig. 14, the amount of the at least one emergency locking retractor 2B, 2B' is two. The two shoulder webbings 3B, 3B' are respectively connected to the two emergency locking retractors 2B, 2B'.

With reference to Figs. 13, 14, 24, and 26, the two automatic locking retractors 4B, 4B' are adapted to be disposed on two sides or the outside of the seat in the vehicle. Each one of the two automatic locking retractors 4B, 4B' has a lower webbing 5B, 5B' being extracted, retracted, and locked automatically.

With reference to Figs. 13, 24, and 26, the webbing locking device 1B is connected between the two shoulder webbings 3B, 3B' of the emergency locking-retracting mechanism 9 and the two lower webbings 5B, 5B' of the two automatic locking retractors 4B, 4B', and provides multiple fixing points distributed around the seat. The two shoulder webbings 3BA, 3B' of the at least one emergency locking retractor 2B, 2B' can be pulled freely. When the vehicle is decelerated or braked in emergency, the two shoulder webbings 3B, 3B' can generate a locking function. The two lower webbings 5B, 5B of the two automatic locking retractors 4B, 4B' can be pulled, are retracted automatically to a suitable length for fitting the occupant, and then are locked.

The difference between the first and second embodiments of the multi-point seat belt system A and the third and fourth embodiments of the multi-point seat belt system B is in the structure of the webbing locking device 1A, 1B, and the connecting way between the two shoulder webbings 3A, 3A', 3B, 3B' of the emergency locking-retracting mechanism 9 and the two lower webbings 5A, 5A', 5B, 5B' of the two automatic locking retractors 4A, 4A', 4B, 4B'.

With reference to Figs. 13 to 16, in the third and fourth embodiments of the multi-point seat belt system B, the webbing locking device 1B has the buckle assembly 10B, the tongue assembly 20B, and two sliding members 30B. The tongue assembly 20B is selectively locked or unlocked with the buckle assembly 10B. The two sliding members 30B are respectively disposed in the buckle assembly 10B and the tongue assembly 20B, and respectively lock or unlock the two shoulder webbings 3B, 3B' passing through the buckle assembly 10B and the tongue assembly 20B.

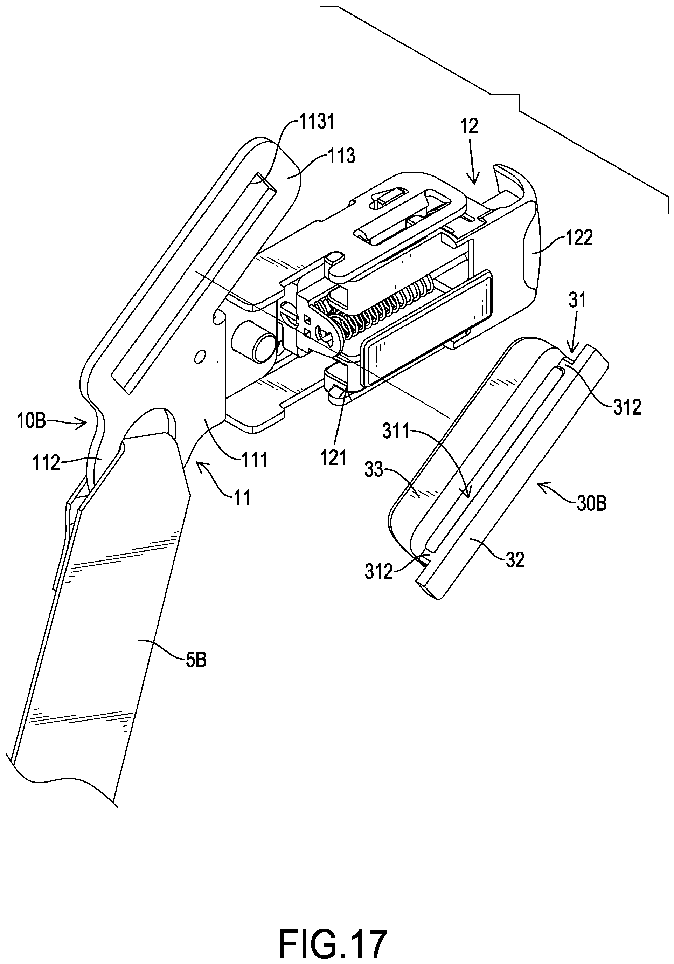

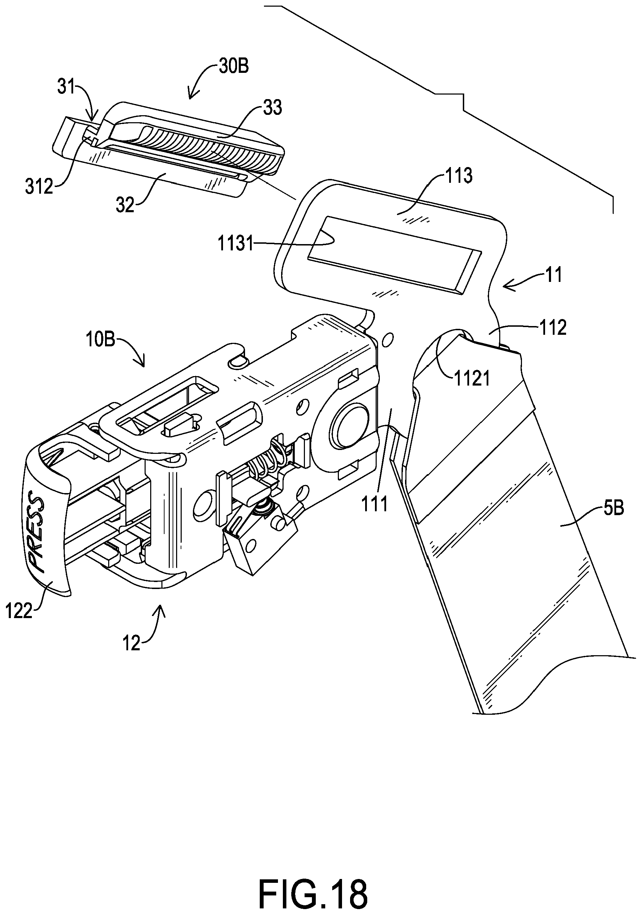

With reference to Figs. 13 to 18, the buckle assembly 10B has the buckle base 11 and the locking assembly 12. The buckle base 11 is made of the rigid material or the metallic material, such as steel. The buckle base 11 has a body 111, a first connecting portion 112, and a first insertion portion 113. The first connecting portion 112 and the first insertion portion 113 are formed on an end of the body 111. The first connecting portion 112 is located below the first insertion portion 113 and has a first connecting hole 1121. The first connecting hole 1121 is formed through the first connecting portion 112. The locking assembly 12 is disposed on the body 111 of the buckle base 11. The locking assembly 12 has the locking mechanism 121 and the pressing member 122. The pressing member 122 can selectively drive the locking mechanism 121 to change the locked state to the unlocked state. The locking assembly 12 can be selected from the known product and will not be described herein.

With reference to Figs. 13 to 18, the tongue assembly 20B has the tongue base 21. The tongue base 21 is the rigid base and is made of the rigid material or the metallic material, such as steel. The tongue base 21 has the tongue portion 211, the second connecting portion 212, and the second insertion portion 213. The second connecting portion 212 and the second insertion portion 213 are formed on the end of the tongue portion 211. The second connecting portion 212 is located below the second insertion portion 213. The second connecting portion 212 has the second connecting hole 2121 formed through the second connecting portion 212. The second insertion portion 213 has the second through hole 2131. The second through hole 2131 is formed through the second insertion portion 213 and is the elongated hole. The tongue portion 211 of the tongue assembly 20B can be selectively inserted into and is locked in the locking assembly 12 of the buckle assembly 10B. When the pressing member 122 of the locking assembly 12 is pressed, the locking assembly 12 can release the tongue assembly 20B.

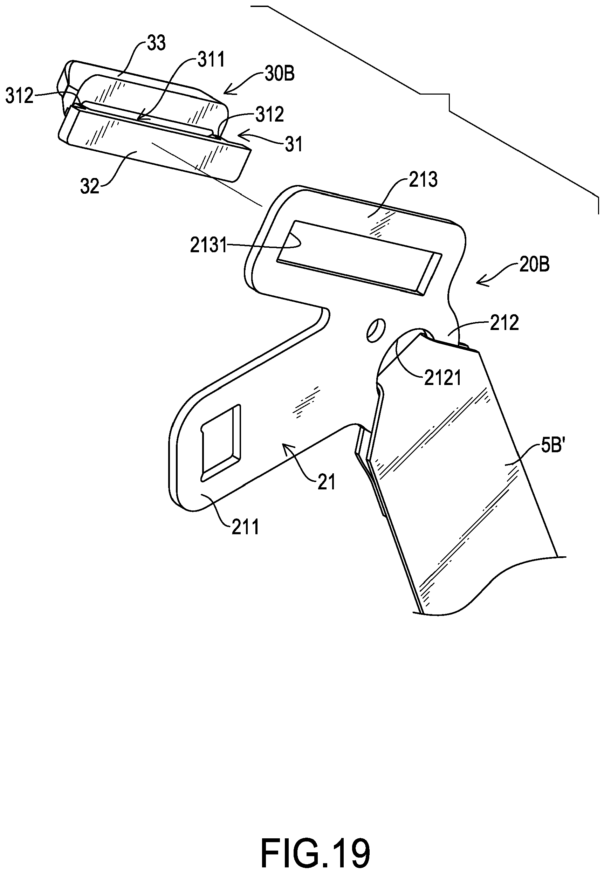

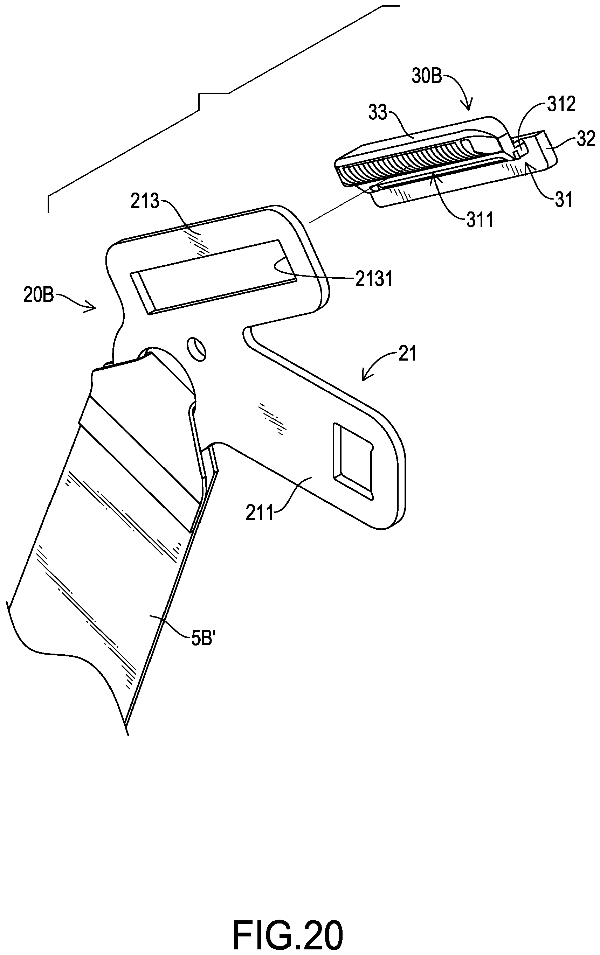

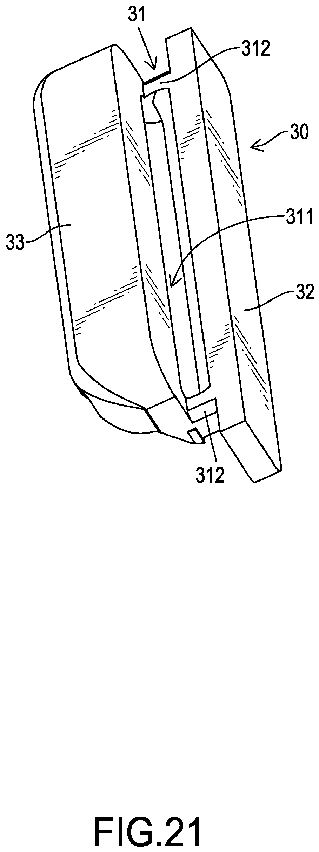

With reference to Figs. 13 to 23, one of the two sliding members 30B is slidably inserted through the first through hole 1131 of the first insertion portion 113 of the buckle assembly 10B and is able to move relative to the first insertion portion 113. The other one of the two sliding members 30B is slidably inserted through the second through hole 2131 of the second insertion portion 213 of the tongue assembly 20B and is able to move relative to the second insertion portion 213.

Each one of the two sliding members 30B has a first side plate 32 having a top end, a second side plat 33, and a base portion 31. The second side plate 33 is opposite to the first side plate 32 at a spaced interval and has a bottom end. The base portion 31 is formed between the first side plate 32 and the second side plate 33 and has a through groove 311 and two walls 312. The through groove 311 downwardly and inclinedly extends from the top end of the first side plate 32 to the bottom end of the second side plate 33. The two walls 312 are both connected to the first side plate 32 and the second side plate 33, and are located at two opposite sides of the through groove 311, respectively.

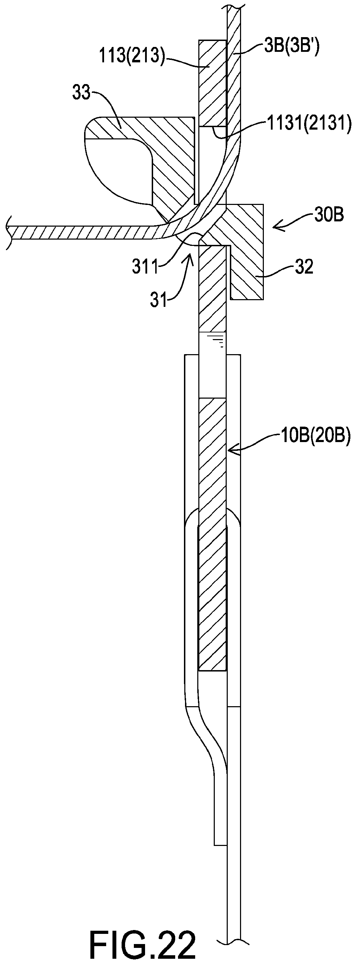

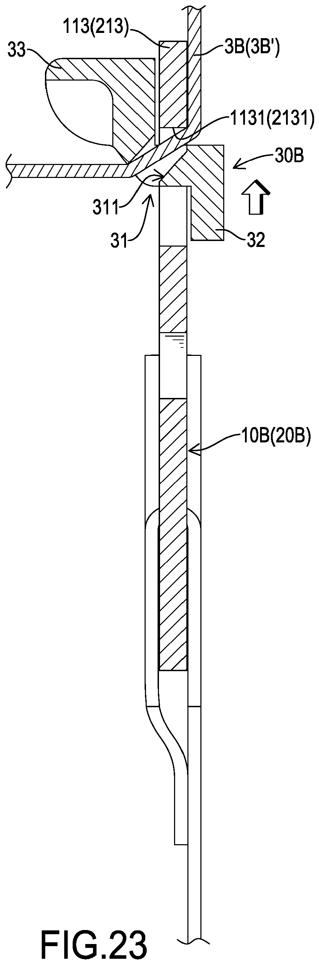

With reference to Figs. 13 to 23, in one of the two sliding members 30B, the base portion 31 is inserted through the first through hole 1131 of the first insertion portion 113 of the buckle assembly 10B. The first side plate 32 and the second side plate 33 are respectively located at the two opposite sides of the first insertion portion 113. One of the two shoulder webbings 3B is inserted through the first through hole 1131 of the first insertion portion 113 of the buckle assembly 10B and the through groove 311 of a corresponding one of the two sliding members 30B. In the other one of the two sliding members 30B, the base portion 31 is inserted through the second through hole 2131 of the second insertion portion 213 of the tongue assembly 20B. The first side plate 32 and the second side plate 33 are respectively located at two opposite sides of the second insertion portion 213. The other one of the two shoulder webbings 3B' is inserted through the second through hole 2131 of the second insertion portion 213 of the tongue assembly 20B and the through groove 311 of the other one of the two sliding members 30B. The two sliding members 30B respectively slide in a limited range in the first insertion portion 113 of the buckle assembly 10B and a limited range in the second insertion portion 213 of the tongue assembly 20B. With reference to Figs. 22 and 23, the two shoulder webbings 3B, 3B' passing through the buckle assembly 10B and the tongue assembly 20B can be locked or unlocked by the two sliding members 30B, respectively.

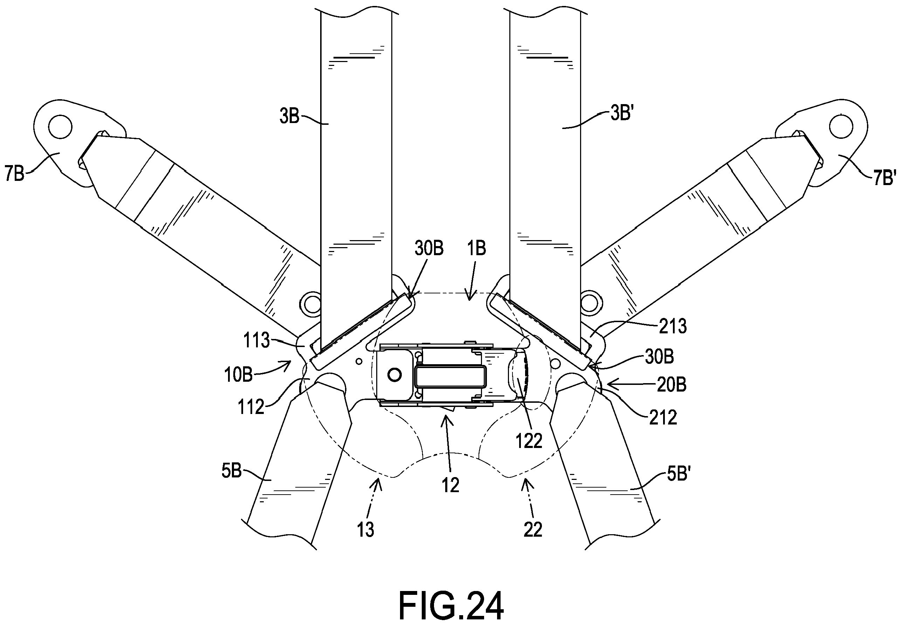

With reference to Figs. 14 and 24, in the webbing locking device 1B, the buckle assembly 10B further has a buckle outer shell 13. The buckle outer shell 13 covers the buckle base 11 and the locking assembly 12. The first connecting portion 112 of the buckle base 11, the first insertion portion 113 having one of the two sliding members 30B, and the pressing member 122 of the locking assembly 12 are exposed out of the buckle outer shell 13. The tongue assembly 20B further has a tongue outer shell 22. The tongue outer shell 22 covers the tongue base 21. The tongue portion 211 of the tongue base 21, the second connecting portion 212, and the second insertion portion 213 having the other one of the two sliding members 30B are exposed out of the tongue outer shell 22.

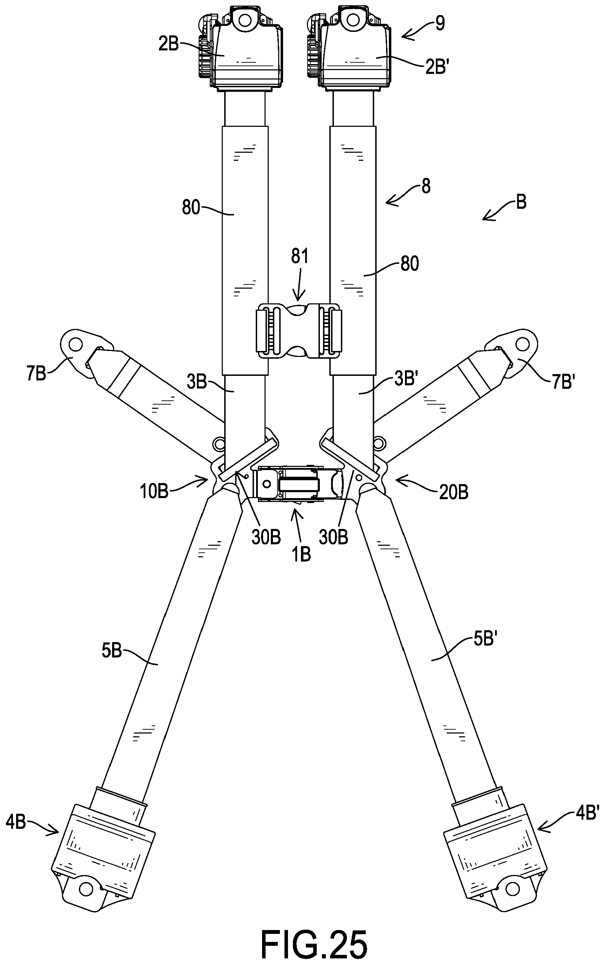

With reference to Figs. 14 and 25, in the third embodiment and the fourth embodiment of the multi-point seat belt system B, the multi-point seat belt system B has a shoulder webbing connecting device 8. The shoulder webbing connecting device 8 is detachable and is selectively disposed between the two shoulder webbings 3B, 3B' for limiting a distance between the two shoulder webbings 3B, 3B'. The two webbing sheaths 80 are respectively and detachably disposed around the two shoulder webbings 3B, 3B'. The buckling assembly 81 is detachably connected between the two webbing sheaths 80. The webbing sheaths 80 and the buckling assembly 81 can be selected from the known products and will not be described herein.

With reference to Figs. 13, 14, 24, and 26, when the third embodiment and fourth embodiment of the multi-point seat belt system B are in use, taking the fourth embodiment of the multi-point seat belt system B for example, the two emergency locking retractors 2B, 2B' are disposed on the top end of the seat back of the seat in the vehicle, or the back side of the top end of the seat back, or the seat back. The two shoulder webbings 3B, 3B' of the two emergency locking retractors 2B, 2B' can respectively detour a top side of the seat back and extend downwardly. The shoulder webbing 3B of one of the two emergency locking retractors 2B passes through the first insertion portion 113 of the buckle assembly 10B and is disposed at a side of the cushion of the seat by the distal end thereof connected to a shoulder fixing member 7B. The shoulder webbing 3B' of the other one of the two emergency locking retractors 2B' passes through the second first insertion portion 213 of the tongue assembly 20B and is disposed at another side of the cushion of the seat by the distal end thereof connected to another shoulder fixing member 7B'.

With reference to Figs. 14, 24, and 26, in the fourth embodiment of the multi-point seat belt system B, the two automatic locking retractors 4B, 4B' are respectively disposed on the two sides of the seat or disposed out of the seat. The two lower webbings 5B, 5B' of the two automatic locking retractors 4B, 4B' are respectively and upwardly extended from the two sides of the cushion. The lower webbing 5B of one of the two automatic locking retractors 4B is inserted through the first connecting hole 1121 of the first connecting portion 112 of the buckle assembly 10B. The lower webbing 5B' of the other one of the two automatic locking retractors 4B' is inserted through the second connecting hole 2121 of the second connecting portion 212 of the tongue assembly 20B.

With reference to Figs. 14, 24, and 26, in the fourth embodiment of the multi-point seat belt system B, the two shoulder webbings 3B, 3B' of the two emergency locking retractors 2B, 2B' can be pulled freely. When the vehicle is decelerated or braked in emergency, the two shoulder webbings 5B, 5B' generate the locking function. The lower webbing 5B, 5B' of each one of the two automatic locking retractors 4B, 4B' can be pulled, is retracted automatically to the suitable length for fitting the occupant, and then is locked. When the occupant sitting on the seat fastens the multi-point seat belt system B, the webbing locking device 10B can be moved to the position adjacent to the center of the pelvis of the occupant by the occupant. When the webbing locking device 10B is moving, the two shoulder webbings 3B, 3B' and the two lower webbings 5B, 5B' can be pulled and move to the suitable lengths automatically. The length adjustments of the two shoulder webbings 3B, 3B' and the two lower webbings 5B, 5B' are not done manually. The occupant can fasten the multi-point seat belt system B quickly and conveniently.

Moreover, after the occupant is seated on the seat, with reference to Figs. 14, 22, 24, and 26, for adjusting the height position of the webbing locking device 1B located on the two shoulder webbings 3B, 3B', two hands of the occupant hold the buckle base 11 of the buckle assembly 10B and the tongue base 21 of the tongue assembly 20B respectively and instinctively. The first insertion portion 113 of the buckle base 11 moves relative to one of the two sliding members 30B disposed on the first insertion portion 113 for unlocking one of the two shoulder webbings 3B passing through the first insertion portion 113. The second insertion portion 213 of the tongue assembly 20B moves relative to the other one of the two sliding members 30B disposed on the second insertion portion 213 for unlocking the other one of the two shoulder webbings 3B' passing through the second insertion portion 213. The buckle base 11 of the buckle assembly 10B and the tongue base 21 of the tongue assembly 20B are pushed simultaneously. The buckle assembly 10B and the tongue assembly 20B can be steplessly adjusted to the suitable positions on the two shoulder webbings 3B, 3B'.

After two hands don't hold buckle base 11 of the buckle assembly 10B and the tongue base 21 of the tongue assembly 20B, the tension of the two shoulder webbings 3B, 3B' can be applied to the buckle assembly 10B and the tongue assembly 20B respectively. The first insertion portion 113 of the buckle assembly 10B moves relative to the corresponding one of the two sliding members 30B for clipping and locking one of the two shoulder webbings 3B automatically. The second insertion portion 213 of the tongue assembly 20B moves relative to the corresponding one of the two sliding members 30B for clipping and locking the other one of the two shoulder webbings 3B' automatically.

When the vehicle is tilted, decelerated or braked in emergency, in the fourth embodiment of the multi-point seat belt system B, the two shoulder webbings 3B, 3B' are respectively locked by the two emergency locking retractors 2B, 2B'. The two lower webbings 5B, 5B' are respectively tightened by the two automatic locking retractors 4B, 4B'. The shoulder webbings 3B, 3B' and the lower webbings 5B, 5B' are distributed around the body of the occupant and can fasten the occupant on the seat steadily for promoting the safety protection performance of the multi-point seat belt system B.

## Claims

1. A multi-point seat belt system **characterized in that** the multi-point seat belt system (A, B) comprises:
a webbing locking device (1A, 1B) having
a buckle assembly (10A, 10B) having
a buckle base (11) being rigid and having
a first connecting portion (112); and
a first insertion portion (113) formed below the first connecting portion (112) and having a first through hole (1131) formed through the first insertion portion (113); and
a locking assembly (12) disposed on the buckle base (11); and
a tongue assembly (20A, 20B) having
a tongue base (21) being rigid and having a tongue portion (211), a second connecting portion (212), and a second insertion portion (213), the tongue portion (211) selectively inserted into the locking assembly (12) of the buckle assembly (10A, 10B) for locking or unlocking, the second connecting portion (212) and the second insertion portion (213) formed on an end of the tongue portion (211), the second connecting portion (212) located above the second insertion portion (213) of the tongue base (21), the second insertion portion (213) of the tongue base (21) having a second through hole (2131) formed through the second insertion portion (213) of the tongue base (21);
an emergency locking-retracting mechanism (9) having at least one emergency locking retractor (2A, 2A', 2B, 2B') and two shoulder webbings (3A, 3A', 3B, 3B'), the two shoulder webbings (3A, 3A' , 3B, 3B') connected to the at least one emergency locking retractor (2A, 2A', 2B, 2B') for being extracted, retracted, and locked automatically, one of the two shoulder webbings (3A, 3A', 3B, 3B') connected to the first connecting portion (112) of the buckle assembly (10A, 10B), the other one of the two shoulder webbings (3A, 3A', 3B, 3B') connected to the second connecting portion (212) of the tongue assembly (20A, 20B), wherein the emergency locking-retracting mechanism (9) is adapted to be disposed on a seat or a vehicle body (111); and
two automatic locking retractors (4A, 4A', 4B, 4B'), each one of the two automatic locking retractors (4A, 4A' , 4B, 4B') having a lower webbing (5A, 5A, 5B, 5B') being extracted, retracted, and locked automatically, wherein the two automatic locking retractors (4A, 4A' , 4B, 4B') are adapted to be disposed on two sides of the seat, the lower webbing (5A, 5A, 5B, 5B') of one of the two automatic locking retractors (4A, 4A' , 4B, 4B') is inserted through the first through hole (1131) of the first insertion portion (113) of the buckle base (11) and is disposed on a side of a cushion of the seat, and the lower webbing (5A, 5A, 5B, 5B') of the other one of the two automatic locking retractors (4A, 4A' 4B, 4B') is inserted through the second through hole (2131) of the second insertion portion (213) of the tongue base (21) and is disposed on another side of the cushion of the seat.

2. The multi-point seat belt system as claimed in claim 1, wherein the amount of the at least one emergency locking retractor (2A, 2A', 2B, 2B') is one, and the two shoulder webbings (3A, 3A', 3B, 3B') are connected to each other to form a Y-shaped webbing for connecting the emergency locking retractor (2A, 2A', 2B, 2B').

3. The multi-point seat belt system as claimed in claim 1, wherein the amount of the at least one emergency locking retractor (2A, 2A', 2B, 2B') is two, and the two shoulder webbings (3A, 3A', 3B, 3B') are respectively connected to the two emergency locking retractors (2A, 2A', 2B, 2B').

4. The multi-point seat belt system as claimed in any one of claims 1 to 3, wherein
the buckle assembly (10A, 10B) has a buckle outer shell (13), the buckle outer shell (13) covers the buckle base (11) and the locking assembly (12); the first connecting portion (112) of the buckle base (11) and the first insertion portion (113) of the buckle base (11) are exposed out of the buckle outer shell (13);
the locking assembly (12) has a pressing member (122), the pressing member (122) is exposed out of the buckle outer shell (13) of the buckle assembly (10A, 10B); and
the tongue assembly (20A, 20B) has a tongue outer shell (22), the tongue outer shell (22) covers the tongue base (21) and the tongue portion (211) of the tongue base (21); the second connecting portion (212) of the tongue base (21) and the second insertion portion (213) of the tongue base (21) are exposed out of the tongue outer shell (22).

5. The multi-point seat belt system as claimed in any one of claims 1 to 3, wherein the multi-point seat belt system (A, B) has a shoulder webbing connecting device (8), and the shoulder webbing connecting device (8) is detachable and is selectively disposed between the two shoulder webbings (3A, 3A') for limiting a distance between the two shoulder webbings (3A, 3A').

6. A multi-point seat belt system comprising:
a webbing locking device (1A, 1B) having
a buckle assembly (10A, 10B) having
a buckle base (11) being rigid and having
a first connecting portion (112); and
a first insertion portion (113) formed below the first connecting portion (112) and having a first through hole (1131) formed through the first insertion portion (113); and
a locking assembly (12) disposed on the buckle base (11); and
a tongue assembly (20A, 20B) having
a tongue base (21) being rigid and having a tongue portion (211), a second connecting portion (212), and a second insertion portion (213), the tongue portion (211) selectively inserted into the locking assembly (12) of the buckle assembly (10A, 10B) for locking or unlocking, the second connecting portion (212) and the second insertion portion (213) formed on an end of the tongue portion (211), the second insertion portion (213) located above the second connecting portion (212) of the tongue base (21), the second insertion portion (213) of the tongue base (21) having a second through hole (2131) formed through the second insertion portion (213) of the tongue base (21);
two sliding members (30B), one of the two sliding members (30B) inserted through the first through hole (1131) of the first insertion portion (113) of the buckle assembly (10A, 10B) and being able to move relative to the first insertion portion (113) of the buckle base (11), the other one of the two sliding members (30B) inserted through the second through hole (2131) of the second insertion portion (213) of the tongue assembly (20A, 20B) and being able to move relative to the second insertion portion (213) of the tongue base (21), and each one of the two sliding members (30B) having a through groove (311) being inclined;
an emergency locking-retracting mechanism (9) having at least one emergency locking retractor (2A, 2A', 2B, 2B') and two shoulder webbings (3A, 3A'), the two shoulder webbings (3A, 3A') connected to the at least one emergency locking retractor (2A, 2A', 2B, 2B') for being extracted, retracted, and locked automatically, one of the two shoulder webbings (3A, 3A') inserted through the first through hole (1131) of the first insertion portion (113) of the buckle assembly (10A, 10B) and the through groove (311) of one of the two sliding members (30B), the other one of the two shoulder webbings (3A, 3A') inserted through the second through hole (2131) of the second insertion portion (213) of the tongue assembly (20A, 20B) and the through groove (311) of the other one of the two sliding members (30B), wherein the emergency locking-retracting mechanism (9) is adapted to be disposed on a seat or a vehicle body (111), and the two shoulder webbings (3A, 3A', 3B, 3B') are respectively disposed on two sides of a cushion of the seat; and
two automatic locking retractors (4A, 4A', 4B, 4B'), each one of the two automatic locking retractors (4A, 4A', 4B, 4B') having a lower webbing (5A, 5A', 5B, 5B') being extracted, retracted, and locked automatically, the lower webbing (5A, 5A', 5B, 5B') of one of the two automatic locking retractors (4A, 4A' , 4B, 4B') connected to the first connecting portion (112) of the buckle assembly (10A, 10B), the lower webbing (5A, 5A', 5B, 5B') of the other one of the two automatic locking retractors (4A, 4A', 4B, 4B') connected to the second connecting portion (212) of the tongue assembly (20A, 20B), wherein the two automatic locking retractors (4A, 4A') are adapted to be disposed on two sides of the seat.

7. The multi-point seat belt system as claimed in claim 6, wherein the amount of the at least one emergency locking retractor (2A, 2A', 2B, 2B') is one, and the two shoulder webbings (3A, 3A', 3B, 3B') are connected to each other to form a Y-shaped webbing for connecting the emergency locking retractor (2A, 2A', 2B, 2B').

8. The multi-point seat belt system as claimed in claim 6, wherein the amount of the at least one emergency locking retractor (2A, 2A', 2B, 2B') is two, and the two shoulder webbings (3A, 3A', 3B, 3B') are respectively connected to the two emergency locking retractors (2A, 2A', 2B, 2B').

9. The multi-point seat belt system as claimed in any one of claims 6 to 8, wherein each one of the two sliding members (30B) has
a first side plate (32) having a top end;
a second side plate (33) being opposite to the first side plate (32) at a spaced interval and having a bottom end;
a base portion (31) formed between the first side plate (32) and the second side plate (33) and having
two walls (312) both connected to the first side plate (32) and the second side plate (33); and
the through groove (311) downwardly and inclinedly extending from the top end of the first side plate (32) to the bottom end of the second side plate (33); and
wherein in one of the two sliding members (30B), the base portion (31) is inserted through the first through hole (1131) of the first insertion portion (113) of the buckle assembly (10A, 10B), and the first side plate (32) and the second side plate (33) are respectively located at two opposite sides of the first insertion portion (113) of the buckle assembly (10A, 10B), and in the other one of the two sliding members (30B), the base portion (31) is inserted through the second through hole (2131) of the second insertion portion (213) of the tongue assembly (20A, 20B), and the first side plate (32) and the second side plate (33) are respectively located at two opposite sides of the second insertion portion (213) of the tongue assembly (20A, 20B).

10. The multi-point seat belt system as claimed in claim 9, wherein
the buckle assembly (10A, 10B) has a buckle outer shell (13), the buckle outer shell (13) covers the buckle base (11) and the locking assembly (12); the first connecting portion (112) of the buckle base (11) and the first insertion portion (113) of the buckle base (11) having one of the two sliding members (30B) are exposed out of the buckle outer shell (13);
the locking assembly (12) has a pressing member (122), the pressing member (122) is exposed out of the buckle outer shell (13) of the buckle assembly (10A, 10B); and
the tongue assembly (20A, 20B) has a tongue outer shell (22), the tongue outer shell (22) covers the tongue base (21) and the tongue portion (211) of the tongue base (21); the second connecting portion (212) of the tongue base (21) and the second insertion portion (213) of the tongue base (21) having the other one of the two sliding members (30B) are exposed out of the tongue outer shell (22).

11. The multi-point seat belt system as claimed in any one of claims 6 to 8, wherein the multi-point seat belt system (A, B) has a shoulder webbing connecting device (8), and the shoulder webbing connecting device (8) is detachable and is selectively disposed between the two shoulder webbings (3A, 3A', 3B, 3B') for limiting a distance between the two shoulder webbings (3A, 3A', 3B, 3B').
